Europäisches Patentamt

European Patent Office

Office européen des brevets

(11) Publication number: **0 153 034 B1**

# EUROPEAN PATENT SPECIFICATION

(45) Date of publication of patent specification: **08.04.92**   (51) Int. Cl.5: **H04N 9/78**

(21) Application number: **85300544.5**

(22) Date of filing: **25.01.85**

(54) **Luminance/color signal separation filter.**

(30) Priority: **31.01.84 JP 16249/84**
**29.05.84 JP 111771/84**

(43) Date of publication of application:
**28.08.85 Bulletin 85/35**

(45) Publication of the grant of the patent:
**08.04.92 Bulletin 92/15**

(84) Designated Contracting States:
**DE GB NL**

(56) References cited:
**US-A- 4 232 330**
**US-A- 4 240 105**
**US-A- 4 399 454**

(73) Proprietor: **MITSUBISHI DENKI KABUSHIKI KAISHA**
**2-3, Marunouchi 2-chome Chiyoda-ku Tokyo 100(JP)**

(72) Inventor: **Mizutani, Yoshiki c/o Mitsubishi Denki K.K.**
**Denshishohinkaihatsu Kenkyusho**
**1 Babazusho Nagaokakyo-shi Kyoto-fu(JP)**
Inventor: **Kasezawa, Tadashi c/o Mitsubishi Denki K.K.**
**Denshishohinkaihatsu Kenkyusho**
**1 Babazusho Nagaokakyo-shi Kyoto-fu(JP)**
Inventor: **Murakami, Tokumichi c/o Mitsubishi Denki K.K.**
**Johodenshi Kenkyusho 325 Kamimachiya Kamakura-shi Kanagawa-ken(JP)**

(74) Representative: **Burke, Steven David et al**
**R.G.C. Jenkins & Co. 26 Caxton Street London SW1H 0RJ(GB)**

Rank Xerox (UK) Business Services

**Description**

The present invention relates to a luminance/color signal separation filter and a method of luminance/color separation. More particularly, it relates to a luminance/color signal separation filter and a method of luminance/color signal separation wherein a luminance signal or a color signal is extracted from a PAL system composite video signal by converting the PAL system composite video signal in the form of an analog signal into a digital signal thereby to digitally separate the digitized signal into a luminance signal and a color signal.

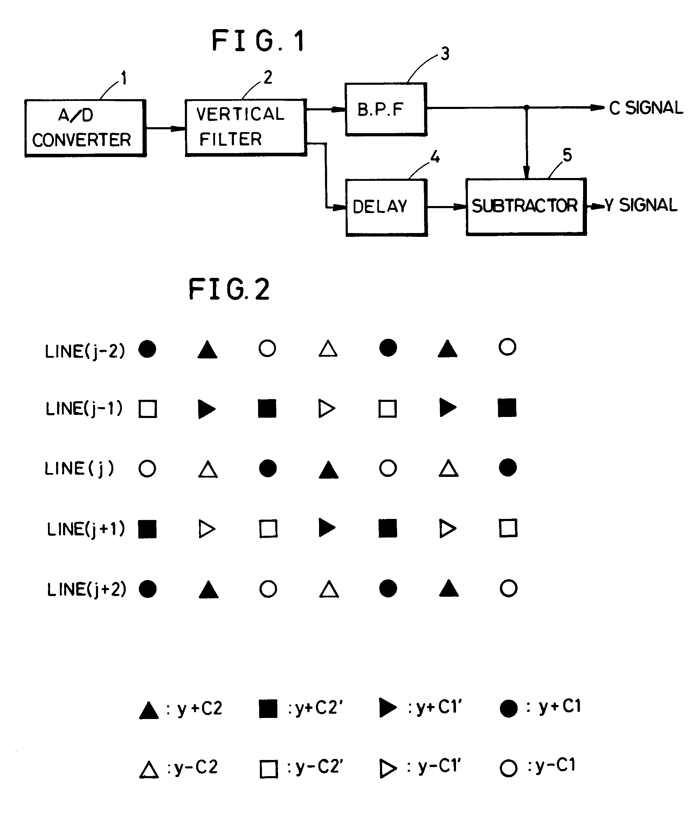

Fig. 1 is a schematic block diagram showing the structure of a conventional luminance/color signal separation filter of a digital system. The structure of the conventional separation filter is now described with reference to Fig. 1. An analog composite video signal of the PAL system is supplied to an A-D converter 1. The A-D converter 1 converts the composite video signal into a digital signal, to supply the same to a vertical filter 2. The vertical filter 2 extracts a line-alternating signal including high-frequency components of a vertical direction and the color signal from the digital signal converted by the A-D converter 1. The output signal from the vertical filter 2 is supplied to a band-pass filter 3. The band-pass filter 3 removes the horizontal low-frequency components from the output signal of the vertical filter 2 to extract the color signal. The color signal output from the band-pass filter 3 is supplied to a subtractor 5. The luminance signal output from the vertical filter 2 is delayed by a delay circuit 4 and then supplied to the subtractor 5. The delay circuit 4 delays the luminance signal for the period by which the color signal is delayed by the band-pass filter 3. The subtractor 5 calculates the difference between the output signal from the band-pass filter 3 and that from the delay circuit 4 so as to extract the luminance signal.

Operation of the luminance/color signal separation filter as shown in Fig. 1 is now described. The analog composite video signal of the PAL system is digitized by the A-D converter 1 into a digital signal series $S(i,j)$ ($i = 1,2, ..., m$, $j = 1, 2, ..., n$) based on a predetermined sampling frequency $f_S$. The digital signal series $S(i,j)$ is supplied to the vertical filter 2 to be filtered therein. The vertical filter 2 is adapted to output a line-alternating signal, and generally includes two 1H delay elements each of which is adapted to delay the input signal by one line. Regarding a specific signal sample, the vertical filter 2 employs sampled values of points respectively upwardly and downwardly separated by two lines from the signal sample, and hence constitutes a vertical band-pass filter for extracting a band with respect to vertical frequency components of color difference signals U and V.

The output signal from the vertical filter 2 is supplied to the band-pass filter 3 so that the horizontal low-frequency components of the luminance signal are removed, so as to obtain the color signal component of the signal sample. The luminance signal is obtained as the difference between the output signal from the delay circuit 4 and the color signal obtained from the band-pass filter 3. In other words, the output from the band-pass filter 3 constitutes the color signal, and the luminance signal is generated by the subtractor 5.

In such a conventional luminance/color signal separation filter the energy of the horizontal high-frequency components of the luminance signal is increased when the video signal includes changes in the horizontal direction. As a result, the separation of the luminance signal and the color signal is degraded, a part of the color signal component being mixed with the generated luminance signal. Similarly, when the video signal includes changes in the vertical direction, the luminance signal energy outside the band of the above-described vertical filter increases, and hence the luminance/color separation becomes impaired.

US 4,399,454 describes a luminance/color signal separation filter for separating the luminance and color components of a digitized composite video signal. This luminance/color signal separation filter comprises converter means for sampling an analog composite video signal at an even multiple of a colour sub-carrier frequency for converting the same into a digital signal; filter means for removing luminance signal components included in said digital signal by combining in a predetermined manner at least two of a plurality of signal samples comprising a test signal sample associated with a first position on the video screen and comparison signal samples associated with respective positions on the video screen in the vicinity of said first position, thereby deriving a combination signal which approximates to the colour component of said test signal sample, said filter means comprising first combining means and second combining means for calculating different combinations of said signal samples, thereby to derive respectively a first combination signal and a second combination signal; and selection means for selecting between at least said first and second combining means, in order to determine which combination signal is to be selected as an output of the filter.

However, the purpose of this filter is to compare signals of one frame with corresponding signals of the subsequent frame. In order to effect such a comparison, the phase of each color component within the one frame needs to be adjusted so as to correspond with the phase of each corresponding color component within the subsequent frame, since the color signal phase is different for signals within consecutive frames.

This system therefore approximates the color components of a signal sample by combining the signals of vertically adjacent sample points (i.e. sample points separated from the signal sample by one complete scanning line) with those of the sample points separated (horizontally) from these vertically adjacent sample points by two sample points. The choice of sample points is dictated by the need to produce a color signal having the same phase as that of the signal sample of the subsequent frame. This patent also discloses the detection of "motion" within a video frame, this being defined as the existence of a difference between the video signals within the lines directly above and directly below that of the signal sample. When such vertical "motion" is detected, only those signals within one of the two vertically adjacent lines are used to generate the desired signal; when no such "motion" is detected, signals from both lines are used. However, there is no provision for sensing such "motion" in any other direction, and, in the event of such "motion" occurring, the resultant luminance/color separation will be impaired. It follows that there is no provision for comparing such "motion" in two different directions and selecting the signals on the basis of such a comparison.

US 4,232,330 describes a luminance/color separation filter wherein digitized signals from adjacent lines are compared to effect the desired separation. However, there is no provision for selecting comparison sample points on the basis of signal values, and consequently there is no provision for mitigating the effects of changes in the video signal in either the horizontal or the vertical direction.

Accordingly, it would be desirable to provide a luminance/color signal separation filter which correlates a signal sample with neighbouring sampled points in both the vertical and horizontal directions of the video screen and which uses the result of the correlation to effect an improved approximation of a component of the signal sample thereby to improve the luminance/color separation.

According to a first aspect of the present invention, there is provided a luminance/color signal separation filter as defined by claim 1 hereinbelow.

According to a second aspect of the present invention, there is provided a method of luminance/color signal separation as defined by claim 12 hereinbelow.

According to a third aspect of the present invention, there is provided a luminance/color signal separation filter as defined by claim 13 hereinbelow.

Therefore, the luminance signal and the color signal can be separated from each other by employment of the signals associated with the direction in which the composite video signal changes less, and hence separation of the luminance signal and the color signal can be performed with reduced degradation of resolution caused by sharp changes in the pictorial image, whereby the received image can be reproduced with reduced cross-color interference and cross-luminance interference.

The above and other features, aspects and advantages of the present invention will become more apparent from the following detailed description of the present invention when taken into conjunction with the accompanying drawings, wherein:

Fig. 1 is a schematic block diagram showing the structure of a conventional luminance/color signal separation filter of a digital system;

Fig. 2 is an illustration showing arrangement of sample-extracted picture elements of a PAL system video signal on a one-field screen;

Fig. 3 is a schematic block diagram showing an embodiment of the present invention;

Fig. 4 is an illustration showing electric structure of another embodiment of the present invention; and

Fig. 5 is an illustration for explaining operation of the embodiment as shown in Fig. 4 in detail, in which symbols are given to a part of the sampled series as shown in Fig. 2.

Fig. 2 is an illustration showing arrangement of sample-extracted picture elements of a PAL system video signal on a one-field screen.

In general, a composite video signal P of the PAL system is composed of a luminance signal Y and a color signal C obtained by quadrature two-phase modulation of two color difference signals U and V (or I and Q) at a color subcarrier frequency $f_{SC}$, and is expressed as follows:

$$P = Y + C$$

$$= Y + U\sin(2\pi f_{SC}t)$$

$$\pm V\cos(2\pi f_{SC}t) \qquad \ldots(1)$$

With respect to the mark "±" in the third term of the above equation, the mark " + " indicates an odd number scanning line and the mark "-" indicates an even number scanning line in the above described composite video signal P. In other words, V components are inverted every scanning line. Assuming that the frame frequency is represented by $f_F$ of 25 Hz and the field frequency is represented by $f_V$ of 50 Hz while the horizontal scanning frequency is represented by $f_H$ of 15,625 KHz, the relationship between these frequencies and the aforementioned color subcarrier frequency $f_{SC}$ is expressed as follows:

$$f_{SC} = (284 - 1/4 + 1/625)f_H$$
$$= (284 - 1/4 + 1/625)625/2 \cdot f_V$$
$$= (284 - 1/4 + 1/625)625 f_F \qquad \ldots (2)$$

Thus, the aforementioned color subcarrier frequency $f_{SC}$ and the horizontal scanning frequency $f_H$ are in 1/4-line offset relation. Therefore, when the PAL system composite video signal is synchronously sampled at the sampling frequency $f_S$ which is four times as large as the color subcarrier frequency, the sampled signal series is arranged on the screen in a two-dimensional manner as shown in Fig. 2. In other words, identical color signal phases are repeated every four-line period such that, assuming that the sampled value in a horizontal i-order sampled point (i, j) on a horizontal scanning line j is represented by S(i, j), the sampled values S(i - 2, j), S(i + 2, j), S(i, j - 2) and S(i, j + 2) in sampled points (i - 2, j), (i + 2, j), (i, j - 2) and (i, j + 2) are identical in color subcarrier phase with each other and different from the sampled value S-(i, j) by 180° in color subcarrier wave.

A normal video signal has such a characteristic that correlation between horizontally and vertically adjacent samples is strong. Therefore, the color signal can be separated from the luminance signal by employing the aforementioned sampled values S(i - 2, j), S(i + 2, j), S(i, j - 2) and S(i, j + 2) with respect to the sampled value S(i, j).

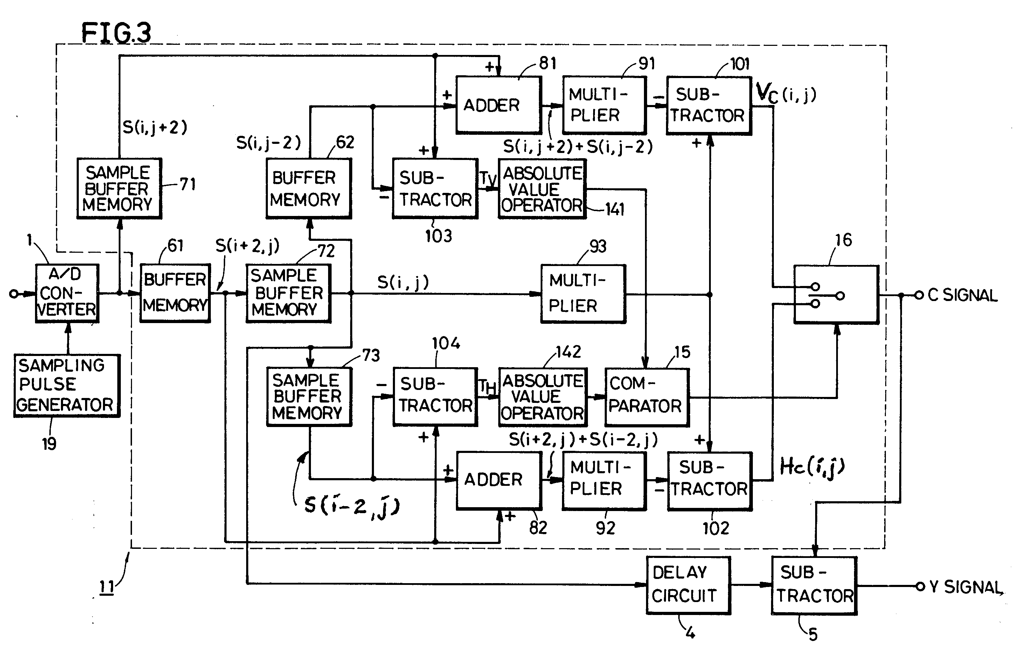

Fig. 3 is a schematic block diagram showing an embodiment of the present invention. Structure of the present embodiment is now described with reference to Fig. 3. A composite video signal is supplied to an A-D converter 1. The A-D converter 1 is further supplied with sampling pulses of the frequency $f_S$ which is four times as large as the color subcarrier frequency $f_{SC}$ of the composite video signal from a sampling pulse generator 19. The composite video signal is converted into a digital signal based on the sampling pulses of the sampling frequency $f_S$ by the A-D converter. The digitalized composite video signal is supplied to a vertical/horizontal direction selective filter 11.

The vertical/horizontal direction selective filter 11 is formed by first and second buffer memories 61 and 62, first, second and third sample buffer memories 71, 72, and 73, first and second adder circuits 81 and 82, first, second and third multipliers 91, 92 and 93, first, second, third and fourth subtractors 101, 102, 103 and 104, first and second absolute value operators 141 and 142, a comparator 15 and a selection switch 16.

The buffer memories 61 and 62 are adapted to delay the inputted digital signal by two horizontal scanning periods, and are formed by, e.g., RAMs. The buffer memories 61 and 62 temporarily store the inputted digital signal and read out the stored digital signal after a predetermined period of time, i.e., two horizontal scanning periods from the time of storing thereby to delay the inputted digital signal. The sample buffer memories 71, 72 and 73 are adapted to delay the inputted digital signal by two sampled points, and are formed by, e.g., RAMs. The sample buffer memories 71, 72 and 73 temporarily store the inputted digital signal and read out the stored digital signal after a predetermined period of time, i.e., two sampled points from the time of storing thereby to delay the digital signal.

The adder circuit 81 adds the output from the second buffer memory 62 and the output from the first sample buffer memory 71. The second adder circuit 82 adds the output from the first buffer memory 61 and that from the third sample buffer memory 73. The first and second multipliers 91 and 92 are adapted to multiply the outputs from the adder circuits 81 and 82 by 1/4 respectively. The third multiplier 93 multiplies the output from the second sample buffer memory 72 by 1/2.

The first subtractor 101 finds the difference between the output from the third multiplier 98 and that from the first multiplier 91, while the second subtractor 102 finds the difference between the output from the third multiplier 93 and that from the second multiplier 92. The third subtractor 103 finds the difference between the output from the first sample buffer memory 71 and that from the second buffer memory 62. The fourth subtractor 104 finds the difference between the output from the first buffer memory 61 and that from the third sample buffer memory 73.

The absolute value operators 141 and 142 include, e.g., exclusive OR circuits and adders, to find the absolute values of the outputs from the third subtractor 103 and the fourth subtractor 104 respectively.

The comparator 15 compares the outputs from the first and second absolute value operators 141 and 142, to supply a switching signal to the selection switch 16 as hereafter described. The selection switch 16 receives the switching signal from the comparator 15 to select and output either the output signal from the first subtractor 101 or that from the second subtractor 102 both connected to the selection switch 16, and is formed by, e.g., a multiplexer.

Description is now made on operation of the luminance/color signal separation filter as shown in Fig. 3. With respect to the signal digitalized by the A-D converter 1, a color signal $C(i, j)$ in the sampled value $s(i, j)$ of a sampled point $(i, j)$ in the signal series is found by difference values of vertical direction and horizontal direction employing four sampled values, i.e., sampled values $S(i, j - 2)$ and $S(i, j + 2)$ of sampled points $(i, j - 2)$ and $(i, j + 2)$ upwardly and downwardly separated by two scanning lines from the sampled point $(i, j)$ respectively and sampled values $S(i - 2, j)$ and $S(i + 2, j)$ of sampled points $(i - 2, j)$ and $(i + 2, j)$ leftwardly and rightwardly separated by two scanning lines from the same respectively as follows:

$$T_V = S(i, j + 2) - S(i, j - 2) \qquad (3)$$
$$T_H = S(i + 2, j) - S(i - 2, j) \qquad (4)$$

As clearly shown in Fig. 3, the sampled value $S(i, j)$ is outputted from the second sample buffer memory 72, the sampled value $S(i, j - 2)$ is outputted from the second buffer memory 62, the sampled value $S(i, j + 2)$ is outputted from the first sample buffer memory 71, the sampled value $S(i - 2, j)$ is outputted from the third sample buffer memory 73 and the sampled value $S(i + 2, j)$ is outputted from the first buffer memory 61 while the value $T_V$ is outputted from the third subtractor 103 and the value $T_H$ is outputted from the fourth subtractor 104.

On the other hand, vertical and horizontal color signals $V_C$ and $H_C$ are operated employing the sampled values $S(i, j - 2)$, $S(i, j + 2)$, $S(i - 2, j)$ and $S(i + 2, j)$ as follows:

$$H_C(i, j) = -1/4 \cdot S(i - 2, j) + 1/2 \cdot S(i, j)$$
$$- 1/4 \cdot S(i + 2, j) \qquad \ldots (5)$$

$$V_C(i, j) = -1/4 \cdot S(i, j - 2) + 1/2 \cdot S(i, j)$$
$$- 1/4 \cdot S(i, j + 2) \qquad \ldots (6)$$

As obviously understood from Fig. 3, the above formulas (5) and (6) are obtained in the following manner: The sampled value $S(i, j + 2)$ from the first sample buffer memory 71 and the sampled value $S(i, j - 2)$ from the second buffer memory 62 are added up by the first adder circuit 81 whereby the value $S(i, j + 2) + S(i, j - 2)$ is inputted in the first multiplier 91. This value is then multiplied by 1/4 by the first multiplier 91 so that the multiplied value $1/4 \cdot S(i, j + 2) + 1/4 \cdot S(i, j - 2)$ is inputted in the first subtractor 101. The sampled value $S(i, j)$ from the second sample buffer memory 72 is multiplied by 1/2 by the third multiplier 93, whereby the 1/2-multiplied value $1/2 \cdot S(i, j)$ is inputted in the first subtractor 101. The first subtractor 101 outputs the difference between the values $1/4 \cdot S(i, j + 2) + 1/4 \cdot S(i, j - 2)$ and $1/2 \cdot S(i, j)$, i.e., the remainder $-1/4 \cdot S(i, j - 2) + 1/2 \cdot S(i, j) - 1/4 \cdot S(i, j + 2) = H_C(i, j)$.

The sampled value $S(i + 2, j)$ from the first buffer memory 61 and the sampled value $S(i - 2, j)$ from the third sample buffer memory 73 are added up by the second adder circuit 82, whereby the value $S(i + 2, j) + S(i - 2, j)$ is inputted in the second multiplier 92. This value is multiplied by 1/4 by the second multiplier 92 so that the 1/4-multiplied value $1/4 \cdot S(i + 2, j) + 1/4 \cdot S(i - 2, j)$ is inputted in the second subtractor 102. The second subtractor 102 outputs the difference between the value $1/4 \cdot S(i + 2, j) + 1/4 \cdot S(i - 2, j)$ and the value $1/2 \cdot S(i, j)$, i.e., the value $-1/4 \cdot S(i - 2, j) + 1/2 \cdot S(i, j) - 1/4 \cdot S(i + 2, j) = V_C(i, j)$.

As clearly understood from Fig. 2, $S(i, j) = y + c_2$, $S(i, j - 2) = y - c_2$, $S(i, j + 2) = y - c_2$, $S(i + 2, j) = y - c_2$ and $S(i - 2, j) = y - c_2$, and hence the signal $V_C(i, j)$ is equal to $(-1/4) \times (y - c_2) + (1/2) \times (y + c_2) - (1/4) \times (y - c_2) = c_2$ and the signal $H_C(i, j)$ is equal to $(-1/4) \times (y - c_2) + (1/2) \times (y + c_2) - (1/4) \times (y - c_2) = c_2$, whereby the signals $V_C(i, j)$ and $H_C(i, j)$ are both obtained immediately as color signals.

The said difference values $T_V$ and $T_H$ of the luminance signal as operated by the above formulas (3) and (4) are converted into the absolute values $|T_V|$ and $|T_H|$ by the absolute value operators 141 and 142. These signals are inputted in the comparator 15. The comparator 15 selects the output signals from the first and second subtractors 101 and 102 to extract the color signals by switching the selection switch 16 under the following conditions:

When the absolute value $|T_V|$ is less than the absolute value $|T_H|$, the selection switch 16 outputs the output signal from the first subtractor 101, i.e., the signal $V_C(i, j)$ as expressed by the formula (6); and

When the absolute value $|T_V|$ is greater than or equal to the absolute value $|T_H|$, the selection switch 16 outputs the output signal from the second subtractor 102, i.e., the signal $H_C(i, j)$ expressed by the formula (5).

Namely, difference absolute values of vertical direction and horizontal direction are found employing the sampled values $S(i, j - 2)$, $S(i, j + 2)$, $S(i - 2, j)$ and $S(i + 2, j)$ in phase-inverted sampled positions of the color signal in the vicinity of the noted sampled point $(i, j)$, so as to employ two of the sampled values in the direction of smaller high frequency component value for performing the operation as hereinafter described thereby to remove the low frequency components of the luminance signal.

Removed as the result are the vertical or horizontal luminance signal components in the noted sampled point $(i, j)$, whereby the signal $H_C$ or $V_C$ is immediately obtained as the color signal. At this time, the luminance signal $Y(i, j)$ is found as the difference between the output signal from the delay circuit 4 and the color signal by the following operation:

$$Y(i, j) = S(i, j) - C(i, j) \qquad (7)$$

Further, the luminance signal and the color signal may be separated from each other by operating values of difference between the sampled value $S(i, j)$ of the sampled point $(i, j)$ and the sampled values $S(i - 2, j - 2)$, $S(i + 2, j - 2)$, $S(i - 2, j + 2)$ and $S(i + 2, j + 2)$ in sampled points $(i - 2, j - 2)$, $(i + 2, j - 2)$, $(i - 2, j + 2)$ and $(i + 2, j + 2)$ as:

$$C(i, j) = 1/4\{S(i + 2, j) - 2S(i, j) + S(i, j + 2)\}$$
$$Y(i, j) = -1/4\{S(i + 2, j) + 2S(i, j) + S(i, j + 2)\}$$

assuming that, for example, the absolute value $|S(i + 2, j + 2) - S(i, j)|$ is the smallest.

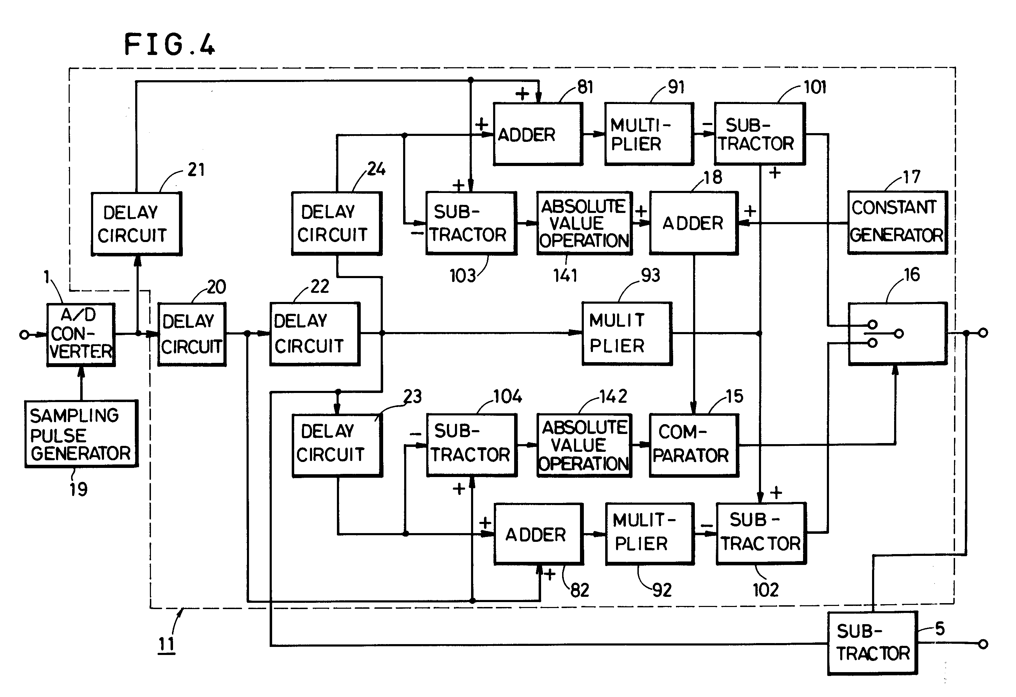

Fig. 4 is a block diagram showing another embodiment of the present invention. The embodiment as shown in Fig. 4 is substantially identical to that shown in Fig. 3, except for the following points: The first and second buffer memories 61 and 62 as shown in Fig. 3 are replaced by delay circuits 20 and 24 while the first, second and third sample buffer memories 71, 72 and 73 are replaced by delay circuits 21, 22 and 23. Removed is the delay circuit 4 which is provided between the sample buffer memory 72 and the subtractor 5 in Fig. 3. A first absolute value operator 141 is provided in its output with an adder circuit 18, which receives a predetermined constant K from a constant generator circuit 17. The adder circuit 18 adds up the output from the first absolute value operator 141 and the output from the constant generator circuit 17, to supply the summed value to a comparator circuit 15.

The first and second delay circuits 20 and 24 are adapted to delay the output from an A-D converter 1 by two horizontal scanning periods. The third to fifth delay circuits 21 to 23 delay the same by two sampled values.

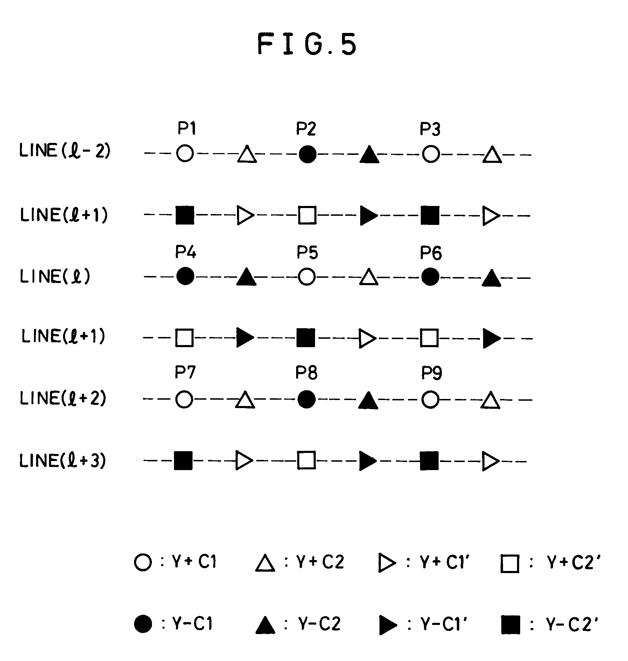

Fig. 5 illustrates operation of the embodiment as shown in Fig. 4 with symbols given to a part of the sampled series as shown in Fig. 1.

With reference to Fig. 5, description is now made on operation of the luminance/color signal separation filter as shown in Fig. 4.

The A-D converter 1 converts the inputted analog composite video signal into a digital signal by sampling pulses received from a sampling pulse generator circuit 19. Arrangement of the sampled series of the PAL system composite video signal sampled by the sampling pulses is as shown in Fig. 1 on the screen.

Assuming here that the A-D converter 1 outputs the sampled value of a sampled point P9 at given time T, the third delay circuit 21 outputs the sampled value of a sampled point P8 in the vicinity of the sampled point P9. On the other hand, the first delay circuit 20 outputs the sampled value of a sampled point P6 which is delayed by two horizontal scanning lines from the sampled point P9. Further, the fourth delay circuit 22 outputs the sampled value of a sampled point P5 which is in the vicinity of the sampled point P6 and the fifth delay circuit 23 outputs the sampled value of a sampled point P4 in the vicinity of the sampled point P5. The second delay circuit 24 outputs the sampled value of a sampled point P2 which is delayed by two scanning lines from the sampled point P8.

A first adder circuit 81 is adapted to add up the output from the first delay circuit 21, i.e., the sampled value of the sampled point P8 and the output from the second delay circuit 24, i.e., the sampled value of

6

the sampled point P2, and a first multiplier circuit 91 multiplies the output from the first adder circuit 81 by 1/4. Another multiplier circuit 93 is adapted to multiply by one half the output from the fourth delay circuit 22, i.e. the sampled value of the sampled point P5. A first subtracter circuit 101 subtracts the output signal of the first multiplier circuit 91 from the output signal of the multiplier circuit 93, and hence the subtracter circuit 101 outputs:

-1/4 (sampled value of sampled point P2)
+ 1/2 (sampled value of sampled point P5)
-1/4 (sampled value of sampled point P8)

The second adder circuit 82 is adapted to add up the output from the fifth delay circuit 23, i.e., the sampled value of the sampled point P4 and the output from the first delay circuit 20 i.e., the sampled value of the sampled point P6, while a second multiplier circuit 92 multiplies the output from the second adder circuit 82 by 1/4. Further, a second subtracter circuit 102 subtracts the output of the second multiplier circuit 92 from the output signal of the multiplier circuit 93. Thus, the subtractor circuit 102 outputs:

-1/4 (sampled value of sampled point P4)
+ 1/2 (sampled value of sampled point P5)
-1/4 (sampled value of sampled point P6)

Respective outputs from the third delay circuit 21 and the second delay circuit 24 are inputted in a third subtractor circuit 103, whose output signal is inputted in a first absolute value operator circuit 141 for finding the absolute value thereof. Thus, the output signal $T_V$ from the first absolute value operator circuit 141 is:

$T_V$ = |(sampled value of sampled point P8) - (sampled value of sampled point P2)|

Respective outputs from the first delay circuit 20 and the fifth delay circuit 23 are inputted in a fourth subtractor circuit 104, whose output signal is inputted in a second absolute value operator circuit 142 for finding the absolute value thereof. Thus, the output signal $T_H$ from the second absolute value operator circuit 142 is:

$T_H$ = |(sampled value of sampled point P6) - (sampled value of sampled point P4)|

The output signal $T_V$ from the first absolute value operator circuit 141 is supplied to the third adder circuit 18. The constant generator circuit 17 generates a predetermined constant K, which is supplied to the third adder circuit 18. The third adder circuit 18 adds up the output signal from the first absolute value operator circuit 141 and the output signal from the constant generator 17. Thus, the output signal $T_V'$ from the adder circuit 18 is:

$$T_V' = T_V + K$$

The output signal $T_V'$ from the third adder circuit 18 and the output signal $T_H$ from the second absolute value operator circuit 142 are supplied to a comparator circuit 15. The comparator circuit 15 compares the values $T_V'$ and $T_H'$ to supply a switching signal to a selection switch circuit 16 as hereinafter described. The selection switch circuit 16 is supplied with the output signals from the first and second subtractor circuits 101 and 102, and the comparator circuit 15 supplies the selection switch circuit 16 with the switching signal so that:

the selection switch circuit 16 outputs the output signal of the first subtractor circuit 101 when the value $T_V'$ is less than the value $T_H$; and

the selection switch circuit 16 outputs the output signal of the second subtractor circuit 102 when the value $T_V'$ is greater than or equal to the value $T_H$.

Thus, employed in the embodiment as shown in Fig. 4 are neighboring picture element signals whose color subcarrier phases are inverted for detecting the direction in which the signals are loss changed thereby to separate the color signal from the composite video signal by employing the picture element signals in the said direction, whereby the color signal is correctly separated.

Further, the constant K generated by the constant generator circuit 17 is adapted to prevent lowering of the vertical resolution caused by employment of the sampled values of the sampled points upwardly and downwardly separated by two horizontal scanning lines. Therefore, lowering of the vertical resolution can be prevented by setting an appropriate constant K in the constant generator circuit 17.

In addition, the subtractor circuit 5 is adapted to subtract the output signal of the selection switch circuit 16 from the output signal of the fourth delay circuit 22. The fourth delay circuit 22 outputs the composite video signal and the selection switch circuit 16 outputs the color signal separated from the composite video signal, and hence the subtractor circuit 5 outputs the luminance signal.

**Claims**

7

1. A luminance/color signal separation filter comprising:

(a) converter means (1) for sampling an analog composite video signal at an even multiple of a color sub-carrier frequency for converting the same into a digital signal;

(b) filter means (20, 21, 22, 23, 24, 61, 62, 71, 72, 73, 81, 82, 91, 92, 93, 101, 102) for removing luminance signal components included in said digital signal by combining in a predetermined manner at least two of a plurality of signal samples comprising a test signal sample (S(i,j)) associated with a first position on the video screen and comparison signal samples (S(i,j-2), S(i,j+2), S(i-2,j), S(i+2,j); S(i-2,j-2), S(i+2, j-2), S(i-2,j+2), S(i+2,j+2), S(i-2,j), S(i+2,j), S(i,j-2), S(i,j+2)) associated with respective positions on the video screen in the vicinity of said first position, said filter means comprising first combining means (20, 21, 22, 24, 61, 62, 71, 72, 81, 91, 93, 101) and second combining means (20, 22, 23, 61, 72, 73, 82, 92, 93, 102) for calculating different combinations of said signal samples, thereby to derive respectively a first combination signal ($V_c(i,j)$) and a second combination signal ($H_c(i,j)$) each of which approximates to the color component of said test signal sample; and

(c) selection means (15,16,103,104,141,142; 15,16,17,18,103,104,141,142) for performing a selection between at least said first and second combining means, in order to determine which combination signal is to be selected as an output of said filter;

characterised in that said combination signals are so derived that they are degraded in amounts dependent on changes in the video signal along respective different directions, said selection means comprising means (103,141;103,141,17,18) for deriving a first value dependent on the difference between two samples (S(i,j-2), S(i,j+2); e.g. S(i-2,j-2), S(i,j)) separated in a first direction and having color components in phase, means (104,142) for deriving a second value dependent on the difference between two samples (S(i-2,j), S(i+2,j); e.g. (S(i-2,j+2), S(i,j)) separated in a second direction and having color components in phase, and means (15,16) for comparing said values and for selecting the combination signal indicated by the comparison to be least subject to degradation.

2. A luminance/color signal separation filter as claimed in claim 1, further comprising separating means (5) for receiving said test signal sample and the selected combination signal and for generating a luminance signal in dependence thereon which approximates to the luminance component of said test signal sample.

3. A luminance/color signal separation filter as claimed in claim 1 or claim 2, wherein

said first combination signal is derived from a combination of two vertical comparison signal samples (S(i,j-2), S(i,j+2)) corresponding respectively to the two positions ((i,j-2),(i,j+2)) on the video screen vertically separated from said first position by two sample points, and

said second combination signal is derived from a combination of two horizontal comparison signal samples (S(i-2,j), S(i+2,j)) corresponding respectively to the two positions ((i-2,j), (i+2,j)) on the video screen horizontally separated from said position of said test signal sample by two sample points.

4. A luminance/color signal separation filter as claimed in any one of claims 1 to 3, wherein

said first combining means comprises delay means (61,62,71,72), multiplier means (91,93), adder means (81) and subtractor means (101) and

said second combining means comprises further delay means (61,72,73), further multiplier means (92,93), further adder means (82) and further subtractor means (102).

5. A luminance/color signal separation filter as claimed in claim 4, when dependent on claim 3, wherein

said delay means comprises:

first delay means (20,61) for delaying said digital signal by two horizontal scanning periods for generating a first one (S(i+2,j)) of said two horizontal comparison signal samples;

second delay means (22,72) for delaying said first one of said two horizontal comparison signal samples by two sample points for generating said test signal sample (S(i,j));

third delay means (24,62) for delaying said test signal sample by two horizontal scanning periods for generating a first one (S(i,j+2)) of said two vertical comparison signal samples;

fourth delay means (21,71) for delaying said digital signal by two sample points for generating the second one (S(i,j-2)) of said two vertical comparison signal samples; and

said further delay means comprises:

said first delay means, said second delay means and

fifth delay means (23,73) for delaying said test signal sample by two sample points for generating the second one (S(i-2),j)) of said two horizontal comparison signal samples.

6. A luminance/color signal separation filter as claimed in claim 4 or claim 5, wherein said first combination signal is derived from a combination of two (S(i,j-2), S(i,j + 2)) of said comparison signal samples;

said adder means (81) is adapted for generating the sum of said two of said comparison signal samples;

said multiplier means comprises first multiplier means (91) for multiplying said sum of said two of said first comparison signal samples by 1/4 and second multiplier means (93) for multiplying said test signal sample S(i,j)) by 1/2; and

said subtractor means (101) is adapted for generating the difference between the multiplied signal generated by said first multiplier means and the multiplied signal generated by said second multiplier means.

7. A luminance/color signal separation filter as claimed in claim 6, wherein said second combination signal is derived from a combination of a pair (S(i-2,j), S(i + 2,j)) of said comparison signal samples;

said further adder means (82) is adapted for generating the sum of said pair of said comparison signal samples;

said further multiplier means comprises third multiplier means (92) for multiplying said sum of said pair of said comparison signal samples by 1/4; and

said further subtractor means (102) is adapted for generating the difference between the multiplied signal generated by said second multiplier means and the multiplied signal generated by said third multiplier means.

8. A luminance/color signal separation filter as claimed in any one of claims 1 to 7, wherein said means (103,141;103,141,17,18) for deriving a first value comprises:

first additional subtractor means (103) for generating the difference (Tv) between said two samples separated in said first direction; and

first absolute value determining means (141) for determining the absolute value ($|Tv|$) of the difference signal generated by said first additional subtractor means.

9. A luminance/color signal separation filter as claimed in claim 8, wherein said means (103,141,17,18) for deriving a first value comprises:

constant generator means (17) for generating a predetermined constant signal, and

additional adder means (18) for generating the sum of said absolute value signal ($|Tv|$) generated by said first absolute value determining means (141) and said predetermined constant signal.

10. A luminance/color signal separation filter as claimed in any one of claims 1 to 9, wherein said means (104,142) for deriving a second value comprises:

second additional subtractor means (104) for generating the difference ($T_H$) between said two samples separated in said second direction; and

second absolute value determining means (142) for determining the absolute value ($|T_H|$) of the difference signal generated by said second additional subtractor means.

11. A luminance/color signal separation filter as claimed in claim 1 or claim 2, wherein said selection means comprises means for deriving values each dependent on the difference between the samples of a respective one of four pairs of signal samples, and to perform said selection operation on the basis of the relationship between the derived values.

12. A method of luminance/color signal separation comprising:

(a) sampling an analog composite video signal at an even multiple of a color sub-carrier frequency for converting the same into a digital signal;

(b) removing luminance signal components included in said digital signal by combining in one of at least two different ways at least two of a plurality of signal samples comprising a test signal sample (S(i,j)) associated with a first position on the video screen and comparison signal samples (S(i,j-2), S-(i,j + 2), S(i-2,j), S(i + 2,j); S(i-2,j-2), S(i + 2,j-2), S(i-2,j + 2), S(i + 2,j + 2), S(i-2,j), S(i + 2,j), S(i,j-2), S-(i,j + 2)) associated with respective positions on the video screen in the vicinity of said first position, thereby deriving a combination signal ($V_c(i,j)$ or $H_c(i,j)$) which approximates to the color component of said test signal sample;

characterised by

(c) deriving a first value dependent on the difference between two samples (S(i,j-2), S(i,j + 2); e.g. S(i-2,j-2), S(i,j)) separated in a first direction and having color components in phase, and a second value dependent on the difference between two samples (S(i-2,j), S(i + 2,j); e.g. S(i-2,j + 2), S(i,j)) separated in a second direction and having color components in phase; and

(d) selecting said one of said at least two different ways in dependence on a comparison between the derived values such that there is derived the combination signal ($V_C(i,j)$ or $H_C(i,j)$) which is indicated by said comparison to be the least subject to degradation out of said at least two combination signals.

13. A luminance/color signal separation filter comprising:

(a) converter means (1) for sampling an analog composite video signal at an even multiple of a color sub-carrier frequency for converting the same into a digital signal comprising a color component and a luminance component;

(b) filter means (20, 21, 22, 23, 24, 61, 62, 71, 72, 73, 81, 82, 91, 92, 93, 101, 102) for removing one of said components included in said digital signal by combining in a predetermined manner at least two of a plurality of signal samples comprising a test signal sample (S(i,j)) associated with a first position on the video screen and comparison signal samples (S(i,j-2), S(i,j + 2), S(i-2,j), S(i + 2,j); S(i-2,j-2), S(i + 2, j-2), S(i-2,j + 2), S(i + 2,j + 2), S(i-2,j), S(i + 2,j), S(i,j-2), S(i,j + 2)) associated with respective positions on the video screen in the vicinity of said first position, said filter means comprising first combining means (20, 21, 22, 24, 61, 62, 71, 72, 81, 91, 93, 101) and second combining means (20, 22, 23, 61, 72, 73, 82, 92, 93, 102) for calculating different combinations of said signal samples, thereby to derive respectively a first combination signal ($V_c(i,j)$) and a second combination signal ($H_c$-(i,j)) each of which approximates to the other of said components of said test signal sample; and

(c) selection means (15,16,103,104,141,142; 15,16,17,18,103,104,141,142) for performing a selection between at least said first and second combining means, in order to determine which combination signal is to be selected as an output of said filter;

characterised in that said combination signals are so derived that they are degraded in amounts dependent on changes in the video signal along respective different directions, said selection means comprising means (103,141;103,141,17,18) for deriving a first value dependent on the difference between two samples (S(i,j-2), S(i,j + 2); e.g. S(i-2,j-2), S(i,j)) separated in a first direction and having color components in phase, means (104,142) for deriving a second value dependent on the difference between two samples (S(i-2,j), S(i + 2,j); e.g. S(i-2,j + 2), S(i,j)) separated in a second direction and having color components in phase, and means (15,16) for comparing said values and for selecting the combination signal indicated by the comparison to be least subject to degradation.

**Revendications**

1. Un filtre de séparation de signaux de luminance/couleur, comprenant :

(a) des moyens convertisseurs (1) destinés à échantillonner un signal vidéo composite analogique à un multiple pair d'une fréquence de sous-porteuse de couleur, pour convertir ce signal en un signal numérique ;

(b) des moyens de filtrage (20, 21, 22, 23, 24, 61, 62, 71, 72, 73, 81, 82, 91, 92, 93, 101, 102) destinés à éliminer des composantes de signal de luminance qui sont incluses dans le signal numérique, en combinant d'une manière prédéterminée au moins deux des échantillons d'un ensemble d'échantillons de signal, comprenant un échantillon de signal de test (S(i,j)) associé à une première position sur l'écran vidéo, et des échantillons de signal de comparaison (S(i,j-2), S(i,j + 2), S(i-2,j), S(i + 2,j) ; S(i-2,j-2), S(i + 2,j-2), S(i-2,j + 2), S(i + 2,j + 2), S(i-2,j), S(i + 2,j), S(i,j-2), S(i,j + 2) associés à des positions respectives sur l'écran vidéo au voisinage de la première position, ces moyens de filtrage comprenant des premiers moyens de combinaison (20, 21, 22, 24, 61, 62, 71, 72, 81, 91, 93, 101) et des seconds moyens de combinaison (20, 22, 23, 61, 72, 73, 82, 92, 93, 102), qui sont destinés à calculer différentes combinaisons des échantillons de signal précités, pour élaborer ainsi respectivement un premier signal de combinaison ($V_c(i,j)$) et un second signal de combinaison ($H_c(i,j)$), chacun d'eux constituant une approximation de la composante de couleur de l'échantillon de signal de test ; et

(c) des moyens de sélection (15, 16, 103, 104, 141, 142 ; 15, 16, 17, 18, 103, 104, 141, 142) qui sont destinés à effectuer une sélection entre les premiers et seconds moyens de combinaison, au moins, dans le but de déterminer le signal de combinaison qui doit être sélectionné à titre de signal de sortie des moyens de filtrage ;

caractérisé en ce que les signaux de combinaison sont élaborés d'une manière telle qu'ils sont dégradés dans des proportions qui dépendent de variations du signal vidéo dans différentes directions respectives, les moyens de sélection comprenant des moyens (103, 141 ; 103, 141, 17, 18) pour élaborer une première valeur qui dépend de la différence entre deux échantillons (S(i,j-2), S(i,j + 2) ; par exemple S(i-2,j-2), S(i,j)) séparés dans une première direction et ayant des composantes de couleur en phase, des moyens (104, 142) pour élaborer une seconde valeur qui dépend de la différence entre deux échantillons (S(i-2,j), S(i + 2,j) ; par exemple (S(i-2, j + 2), S(i,j)) séparés dans une seconde direction et ayant des composantes de couleur en phase, et des moyens (15, 16) pour comparer les valeurs précitées et pour sélectionner le signal de combinaison qui est indiqué par la comparaison qui est la moins sujette à dégradation.

**2.** Un filtre de séparation de signaux de luminance/couleur selon la revendication 1, comprenant en outre des moyens de séparation (5) qui sont destinés à recevoir l'échantillon de signal de test et le signal de combinaison sélectionné, et à générer sous la dépendance de ceux-ci un signal de luminance qui constitue une approximation de la composante de luminance de l'échantillon de signal de test.

**3.** Un filtre de séparation de signaux de luminance/couleur selon la revendication 1 ou la revendication 2, dans lequel

le premier signal de combinaison est élaboré à partir d'une combinaison de deux échantillons de signal de comparaison en direction verticale (S(i,j-2), S(i,j + 2)), correspondant respectivement aux deux positions ((i,j-2), (i,j + 2)) sur l'écran vidéo qui sont séparées verticalement de deux points d'échantillons par rapport à la première position, et

le second signal de combinaison est élaboré à partir d'une combinaison de deux échantillons de signal de comparaison en direction horizontale ((S(i-2,j), S(i + 2,j)), correspondant respectivement aux deux positions ((i-2,j), (i + 2,j)) sur l'écran vidéo qui sont séparées horizontalement de deux points d'échantillons par rapport à la position de l'échantillon de signal de test.

**4.** Un filtre de séparation de signaux de luminance/couleur selon l'une quelconque des revendications 1 à 3, dans lequel

les premiers moyens de combinaison comprennent des moyens de retard (61, 62, 71, 72), des moyens multiplieurs (91, 93), des moyens additionneurs (81) et des moyens soustracteurs (101), et

les seconds moyens de combinaison comprennent des moyens de retard supplémentaires (61, 72, 73), des moyens multiplieurs supplémentaires (92, 93), des moyens additionneurs supplémentaires (82) et des moyens soustracteurs supplémentaires (102).

**5.** Un filtre de séparation de signaux de luminance/couleur selon la revendication 4, lorsqu'elle est rattachée à la revendication 3, dans lequel

les moyens de retard comprennent :

des premiers moyens de retard (20, 61) qui sont destinés à retarder le signal numérique de deux périodes de balayage horizontal, pour générer un premier (S(i + 2,j)) des deux échantillons de signal de comparaison en direction horizontale ;

des seconds moyens de retard (22, 72) qui sont destinés à retarder de deux points d'échantillons le premier des deux échantillons de signal de comparaison en direction horizontale, pour générer l'échantillon de signal de test (S(i,j)) ;

des troisièmes moyens de retard (24, 62) qui sont destinés à retarder l'échantillon de signal de test de deux périodes de balayage horizontal, pour générer un premier (S(i,j + 2)) des deux échantillons de signal de comparaison en direction verticale ;

des quatrièmes moyens de retard (21, 71) qui sont destinés à retarder le signal numérique de deux points d'échantillons, pour générer le second (S(i,j-2)) des deux échantillons de signal de comparaison en direction verticale ; et

les moyens de retard supplémentaires comprennent :

les premiers moyens de retard, les seconds moyens de retard, et

des cinquièmes moyens de retard (23, 73) qui sont destinés à retarder l'échantillon de signal de test de deux points d'échantillons, pour générer le second (S(i-2,j)) des deux échantillons de signal de comparaison en direction horizontale.

6. Un filtre de séparation de signaux de luminance/couleur selon la revendication 4 ou la revendication 5, dans lequel le premier signal de combinaison est élaboré à partir d'une combinaison de deux (S(i,j-2), S(i,j+2)) des échantillons de signal de comparaison ;

les moyens additionneurs (81) sont conçus pour générer la somme de ces deux échantillons de signal de comparaison ;

les moyens multiplieurs comprennent des premiers moyens multiplieurs (91) qui sont destinés à multiplier par 1/4 la somme des deux premiers échantillons de signal de comparaison, et des seconds moyens multiplieurs (93) qui sont destinés à multiplier par 1/2 l'échantillon de signal de test (S(i,j)) ; et

les moyens soustracteurs (101) sont conçus de façon à générer la différence entre le signal multiplié que produisent les premiers moyens multiplieurs, et le signal multiplié que produisent les seconds moyens multiplieurs.

7. Un filtre de séparation de signaux de luminance/couleur selon la revendication 6, dans lequel le second signal de combinaison est élaboré à partir d'une combinaison d'une paire (S(i-2,j), S(i+2,j)) des échantillons de signal de comparaison ;

les moyens additionneurs supplémentaires (82) sont conçus de façon à générer la somme de cette paire d'échantillons de signal de comparaison ;

les moyens multiplieurs supplémentaires comprennent des troisièmes moyens multiplieurs (92) qui sont destinés à multiplier par 1/4 la somme de la paire des échantillons de signal de comparaison ; et

les moyens soustracteurs supplémentaires (102) sont conçus de façon à générer la différence entre le signal multiplié que produisent les seconds moyens multiplieurs, et le signal multiplié que produisent les troisièmes moyens multiplieurs.

8. Un filtre de séparation de signaux de luminance/couleur selon l'une quelconque des revendications 1 à 7, dans lequel

les moyens (103, 141 ; 103, 141, 17, 18) destinés à élaborer une première valeur comprennent :

des premiers moyens soustracteurs supplémentaires (103) qui sont destinés à générer la différence (Tv) entre les deux échantillons séparés dans la première direction ; et

des premiers moyens de déterminaison de valeur absolue (141) qui sont destinés à déterminer la valeur absolue (|Tv|) du signal de différence que génèrent les premiers moyens soustracteurs supplémentaires.

9. Un filtre de séparation de signaux de luminance/couleur selon la revendication 8, dans lequel

les moyens (103, 141, 17, 18) qui sont destinés à élaborer une première valeur comprennent :

des moyens générateurs de constante (17) qui sont destinés à générer un signal constant prédéterminé, et

des moyens additionneurs supplémentaires (18) qui sont destinés à générer la somme du signal de valeur absolue (|Tv|) que génèrent les premiers moyens de détermination de valeur absolue (141), et du signal constant prédéterminé.

10. Un filtre de séparation de signaux de luminance/couleur selon l'une quelconque des revendications 1 à 9, dans lequel

les moyens (104, 142) qui sont destinés à élaborer une seconde valeur comprennent :

des seconds moyens soustracteurs supplémentaires (104) qui sont destinés à générer la différence (T$_H$) entre les deux échantillons séparés dans la seconde direction ; et

des seconds moyens de détermination de valeur absolue (142) qui sont destinés à déterminer la valeur absolue (|Tv|) du signal de différence que génèrent les seconds moyens soustracteurs supplémentaires.

11. Un filtre de séparation de signaux de luminance/couleur selon la revendication 1 ou la revendication 2, dans lequel

les moyens de sélection comprennent des moyens qui sont destinés à calculer des valeurs dépendant chacune de la différence entre les échantillons de l'une respective de quatre paires d'échantillons de signal, et à effectuer l'opération de sélection sur la base de la relation entre les valeurs calculées.

12. Un procédé de séparation de signaux de luminance/couleur comprenant les opérations suivantes :

(a) on échantillonne un signal vidéo composite analogique à un multiple pair d'une fréquence de sous-porteuse de couleur, pour convertir ce signal en un signal numérique ;

(b) on élimine des composantes de signal de luminance qui sont incluses dans le signal numérique, en combinant selon une manière parmi au moins deux manières différentes, au moins deux échantillons parmi un ensemble d'échantillons de signal, comprenant un échantillon de signal de test (S(i,j)) associé à une première position sur l'écran vidéo, et des échantillons de signal de comparaison (S(i,j-2), S(i,j+2), (S(i-2,j), S(i+2,j) ; S(i-2,j-2), S(i+2,j-2), S(i-2,j+2), S(i+2,j+2), S(i-2,j), S(i+2,j), S(i,j-2), S(i,j+2)) associés à des positions respectives sur l'écran vidéo, au voisinage de la première position, pour élaborer ainsi un signal de combinaison ($V_c$(i,j) ou $H_c$(i,j)) qui constitue une approximation de la composante de couleur de l'échantillon de signal de test ;

caractérisé en ce que :

(c) on élabore une première valeur qui dépend de la différence entre deux échantillons (S(i,j-2), S(i,j+2) ; par exemple S(i-2,j-2), S(i,j) séparés dans une première direction, et ayant des composantes de couleur en phase, et une seconde valeur qui dépend de la différence entre deux échantillons (S(i-2,j), S(i+2,j) ; par exemple S(i-2,j+2), S(i,j) séparés dans une seconde direction et ayant des composantes de couleur en phase ; et

(d) on sélectionne la manière précitée parmi les deux manières différentes, au moins, sous la dépendance d'une comparaison entre les valeurs élaborées, de façon à élaborer le signal de combinaison ($V_C$(i,j) ou $H_C$(i,j)) qui est indiqué par la comparaison comme étant le moins sujet à dégradation, parmi les deux signaux de combinaison, au mois.

**13.** Un filtre de séparation de signaux de luminance/couleur comprenant :

(a) des moyens convertisseurs (1) qui sont destinés à échantillonner un signal vidéo composite analogique à un multiple pair d'une fréquence de sous-porteuse de couleur, pour convertir ce signal en un signal numérique comprenant une composante de couleur et une composante de luminance ;

(b) des moyens de filtrage (20, 21, 22, 23, 24, 61, 62, 71, 72, 73, 81, 82, 91, 92, 93, 101, 102) qui sont destinés à éliminer l'une des composantes que contient le signal numérique, en combinant d'une manière prédéterminée deux au moins des échantillons d'un ensemble d'échantillons de signal comprenant un échantillon de signal de test (S(i,j)) associé à une première position sur l'écran vidéo, et des échantillons de signal de comparaison (S(i,j-2), S(i,j+2), S(i-2,j), S(i+2,j) ; S(i-2,j-2), S(i+2,j-2), S(i-2,j+2), S(i+2,j+2), S(i-2,j), S(i+2,j), S(i,j-2), S(i,j+2) associés à des positions respectives sur l'écran vidéo, au voisinage de la première position, ces moyens de filtrage comprenant des premiers moyens de combinaison (20, 21, 22, 24, 61, 62, 71, 72, 81, 91, 93, 101) et des seconds moyens de combinaison (20, 22, 23, 61, 72, (73, 82, 92, 93, 102) qui sont destinés à calculer différentes combinaison des échantillons de signal, pour élaborer ainsi respectivement un premier signal de combinaison ($V_c$(i,j) et un second signal de combinaison ($H_c$(i,j)), chacun d'eux constituant une approximation de l'autre des composantes de l'échantillon de signal de test ; et

(c) des moyens de sélection (15, 16, 103, 104, 141, 142 ; 15, 16, 17, 18, 103, 104, 141, 142) qui sont destinés à effectuer une sélection entre au moins les premier et second moyens de combinaison, dans le but de déterminer le signal de combinaison qui doit être sélectionné à titre de signal de sortie du filtre ;

caractérisé en ce que les signaux de combinaison sont élaborés d'une manière telle qu'ils sont dégradés dans des proportions qui dépendent de variations du signal vidéo dans différentes directions respectives, les moyens de sélection comprenant des moyens (103, 141 ; 103, 141, 17, 18) qui sont destinés à élaborer une première valeur dépendant de la différence entre échantillons (S(i,j-2), S(i,j+2) ; par exemple S(i-2,j-2), S(i,j)) séparés dans une première direction et ayant des composantes de couleur en phase, des moyens (104, 142) qui sont destinés à élaborer une seconde valeur dépendant de la différence entre deux échantillons (S(i-2,j), S(i+2,j) ; par exemple (S(i-2,j+2), S(i,j)) qui sont séparés dans une seconde direction et qui ont des composantes de couleur en phase, et des moyens (15, 16) qui sont destinés à comparer les valeurs précitées et à sélectionner le signal de combinaison qui est indiqué par la comparaison comme étant le signal le moins sujet à dégradation.

**Patentansprüche**

**1.** Leuchtdichte-Farbsignaltrennfilter mit:

(a) einer Wandlereinrichtung (1) zum Abtasten eines analogen zusammengesetzten Videosignales an geraden Vielfachen einer Farbhilfsträgerfrequenz zum Umwandeln desselben in ein Digitalsignal;

(b) einer Filtereinrichtung (20, 21, 22, 23, 24, 61, 62, 71, 72, 73, 81, 82, 91, 92, 93, 101, 102) zum Entfernen der in dem digitalen Signal enthaltenen Leuchtdichtesignalkomponenten durch Kombinieren auf einer vorbestimmten Weise von mindestens zwei aus einer Mehrzahl von Signalabtastungen, die eine mit einer ersten Position auf dem Videoschirm assoziierte Testsignalabtastung (S(i,j)) und mit entsprechenden Positionen auf dem Videoschirm in der Nachbarschaft der ersten Position assoziierte Vergleichssignalabtastungen (S(i,j-2), S(i,j+2), S(i-2,j), S(i+2,j); S(i-2,j-2), S(i+2,j-2), S(i-2,j+2), S(i+2,j+2), S(i-2,j), S(i+2,j), S(i,j-2), S(i,j+2)) aufweisen, wobei die Filtereinrichtung eine erste Kombiniereinrichtung (20, 21, 22, 24, 61, 62, 71, 72, 81, 91, 93, 101) und eine zweite Kombiniereinrichtung (20, 22, 23, 61, 72, 73, 82, 92, 93, 102) zum Berechnen verschiedener Kombinationen der Signalabtastungen aufweist, wodurch ein erstes Kombinationssignal ($V_c(i,j)$) bzw. ein zweites Kombinationssignal ($H_c(i,j)$) abgeleitet werden, von denen jedes an die Farbkomponente der Testsignalabtastung angenähert ist; und
(c) einer Auswahleinrichtung (15, 16, 103, 104, 141, 142; 15, 16, 17, 18, 103, 104, 141, 142) zum Ausführen einer Auswahl zwischen mindestens der ersten und zweiten Kombiniereinrichtung zum Bestimmen, welches Kombinationssignal als Ausgabe des Filters auszuwählen ist;

dadurch gekennzeichnet, daß die Kombinationssignale so abgeleitet werden, daß sie in Beträgen in Abhängigkeit von Änderungen in dem Videosignal entlang entsprechender verschiedener Richtungen verschlechtert sind, wobei die Auswahleinrichtung einer Einrichtung (103, 141; 103, 141, 17, 18) zum Ableiten eines ersten Wertes in Abhängigkeit von der Differenz zwischen zwei Abtastungen (S(i,j-2), S(i,j+2); z.B. S(i-2,j-2), S(i,j)), die in einer ersten Richtung getrennt sind und Farbkomponenten in Phase aufweisen, eine Einrichtung (104, 142) zum Ableiten eines zweiten Wertes in Abhängigkeit von der Differenz zwischen zwei Abtastungen (S(i-2,j), S(i+2,j); z.B. S(i-2,j+2), S(i,j)), die in einer zweiten Richtung getrennt sind und Farbkomponenten in Phase aufweisen, und eine Einrichtung (15, 16) zum Vergleichen der Werte und zum Auswählen des Kombinationssignales, das durch den Vergleich als das am wenigsten verschlechterte angezeigt ist, aufweist.

2. Leuchtdichte-Farbsignaltrennfilter nach Anspruch 1, weiter mit einer Trenneinrichtung (5) zum Empfangen der Testsignalabtastung und des ausgewählten Kombinationssignales und zum Erzeugen eines Leuchtdichtesignales in Abhängigkeit davon, daß an die Leuchtdichtekomponente der Testsignalabtastung angenähert ist.

3. Leuchtdichte-Farbsignaltrennfilter nach Anspruch 1 oder 2, bei dem
das erste Kombinationssignal aus einer Kombination von zwei vertikalen Vergleichssignalabtastungen (S(i,j-2), S(i,j+2)), die den zwei entsprechenden Positionen ((i,j-2), (i,j+2)) auf dem Videoschirm entsprechen und vertikal von der ersten Position durch zwei Abtastpunkte getrennt sind, abgeleitet ist und
das zweite Kombinationssignal aus einer Kombination von zwei horizontalen Vergleichssignalabtastungen (S(i-2,j), S(i+2,j)), die den zwei entsprechenden Positionen ((i-2,j), (i+2,j)) auf dem Videoschirm entsprechen, die horizontal von der Position der Testsignalabtastung um zwei Abtastpunkte getrennt sind, abgeleitet sind.

4. Leuchtdichte-Farbsignaltrennfilter nach einem der Ansprüche 1 bis 3, bei dem
die erste Kombiniereinrichtung eine Verzögerungseinrichtung (61, 62, 71, 72), eine Multipliziereinrichtung (91, 93), eine Addiereinrichtung (81) und eine Subtrahiereinrichtung (101) aufweist und die zweite Kombiniereinrichtung eine weitere Verzögerungseinrichtung (61, 72, 73), eine weitere Multipliziereinrichtung (92, 93), eine weitere Addiereinrichtung (82) und eine weitere Subtrahiereinrichtung (102) aufweist.

5. Leuchtdichte-Farbsignaltrennfilter nach Anspruch 4, wenn er von Anspruch 3 abhängt, bei dem
die Verzögerungseinrichtung aufweist:
eine erste Verzögerungseinrichtung (20, 61) zum Verzögern des Digitalsignales um zwei horizontale Abtastperioden zum Erzeugen einer ersten (S(i+2,j)) der zwei horizontalen Vergleichssignalabtastungen;
eine zweite Verzögerungseinrichtung (22, 72) zum Verzögern der ersten der zwei horizontalen Vergleichssignalabtastungen um zwei Abtastpunkte zum Erzeugen der Testsignalabtastung (S(i,j));
eine dritte Verzögerungseinrichtung (24, 62) zum Verzögern der Testsignalabtastung um zwei horizontale Abtastperioden zum Erzeugen einer ersten (S(i,j+2)) der zwei vertikalen Vergleichssignalabtastungen;
eine vierte Verzögerungseinrichtung (21, 71) zum Verzögern des Digitalsignales um zwei Abtastpunkte zum Erzeugen der zweiten (S(i,j-2)) der zwei vertikalen Vergleichssignalabtastungen; und die weitere Verzögerungseinrichtung aufweist:

die erste Verzögerungseinrichtung, die zweite Verzögerungseinrichtung und

eine fünfte Verzögerungseinrichtung (23, 73) zum Verzögern der Testsignalabtastung um zwei Abtastpunkte zum Erzeugen der zweiten (S(i-2,j)) der zwei horizontalen Vergleichssignalabtastungen.

6. Leuchtdichte-Farbsignaltrennfilter nach Anspruch 4 oder 5, bei dem das erste Kombinationssignal aus einer Kombination von zweien (S(i,j-2), S(i,j + 2)) der Vergleichssignalabtastungen abgeleitet ist; die Addierereinrichtung (81) zum Erzeugen der Summe der beiden Vergleichssignalabtastungen ausgelegt ist; die Multipliziereinrichtung eine erste Multipliziereinrichtung (91) zum Multiplizieren der Summe der beiden ersten Vergleichssignalabtastungen mit ein Viertel und eine zweite Multipliziereinrichtung (93) zum Multiplizieren der Testsignalabtastung (S(i,j)) mit ein Halb aufweist; und die Subtrahiereinrichtungen (101) zum Erzeugen der Differenz zwischen dem multiplizierten Signal, das von der ersten Multipliziereinrichtung erzeugt ist, und dem multiplizierten Signal, das von der zweiten Multipliziereinrichtung erzeugt ist, ausgelegt ist.

7. Leuchtdichte-Farbsignaltrennfilter nach Anspruch 6, bei dem das zweite Kombinationssignal aus einer Kombination eines Paares (S(i-2,j), S(i + 2,j)) der Vergleichssignalabtastungen abgeleitet ist; die weitere Addierereinrichtung (82) zum Erzeugen der Summe des Paares der Vergleichssignalabtastungen ausgelegt ist; die weitere Multipliziereinrichtung eine dritte Multipliziereinrichtung (92) zum Multiplizieren der Summe des Paares der Vergleichssignalabtastungen mit ein Viertel aufweist; und die weitere Subtrahiereinrichtung (102) zum Erzeugen der Differenz zwischen dem multiplizierten Signal, das von der zweiten Multipliziereinrichtung erzeugt ist, und dem multiplizierten Signal, das von der dritten Multipliziereinrichtung erzeugt ist, ausgelegt ist.

8. Leuchtdichte-Farbsignaltrennfilter nach einem der Ansprüche 1 bis 7, bei dem die Einrichtung (103, 141; 103, 141, 17, 18) zum Ableiten eines ersten Wertes aufweist: eine erste zusätzliche Subtrahiereinrichtung (103) zum Erzeugen der Differenz (Tv) zwischen den beiden Abtastungen, die in die erste Richtung erzeugt sind; und eine erste Absolutwertbestimmungseinrichtung (141) zum Bestimmen des Absolutwertes (/Tv/) des Differenzsignales, das von der ersten zusätzlichen Subtrahiereinrichtung erzeugt ist.

9. Leuchtdichte-Farbsignaltrennfilter nach Anspruch 8, bei dem die Einrichtung (103, 141, 17, 18) zum Ableiten eines ersten Wertes aufweist: eine konstante Erzeugungseinrichtung (17) zum Erzeugen eines vorbestimmten konstanten Signales und eine zusätzliche Addierereinrichtung (18) zum Erzeugen der Summe des Absolutwertsignales (/Tv/), das durch die erste Absolutwertbestimmungseinrichtung (141) erzeugt ist, und des vorbestimmten Konstantsignales.

10. Leuchtdichte-Farbsignaltrennfilter nach einem der Ansprüche 1 bis 9, bei dem die Einrichtung (104, 142) zum Ableiten eines zweiten Wertes aufweist: eine zweite zusätzliche Subtrahiereinrichtung (104) zum Erzeugen der Differenz ($T_H$) zwischen den zwei Abtastungen, die in die zweite Richtung erzeugt sind; und eine zweite Absolutwertbestimmungseinrichtung (142) zum Bestimmen des Absolutwertes (/$T_H$/) des Differenzsignales, das von der zweiten zusätzlichen Subtrahiereinrichtung erzeugt ist.

11. Leuchtdichte-Farbsignaltrennfilter nach Anspruch 1 oder 2, bei dem die Auswahleinrichtung eine Einrichtung zum Ableiten von Werten aufweist, von denen jeder von der Differenz zwischen den Abtastungen eines entsprechenden der vier Paare von Signalabtastungen abhängt, und zum Ausführen der Auswahltätigkeit auf der Grundlage des Verhältnisses zwischen den abgeleiteten Werten.

12. Verfahren zur Leuchtdichte-Farbsignaltrennung, mit:
(a) Abtasten eines analogen zusammengesetzten Videosignales an geraden Vielfachen einer Farbhilfsträgerfrequenz zum Umwandeln desselben in ein Digitalsignal;
(b) Entfernen von in dem Digitalsignal enthaltenen Leuchtdichtesignalkomponenten durch Kombinieren auf einer von mindestens zwei verschiedenen Weisen von mindestens zwei aus einer Mehrzahl

15

EP 0 153 034 B1

von Signalabtastungen mit einer Testsignalabtastung (S(i,j)) die mit einer ersten Position auf dem Videoschirm assoziiert ist, und Vergleichssignalabtastungen (S(i,j-2), S(i,j+2), S(i-2,j), S(i+2,j); S(i-2,j-2), S(i+2,j-2), S(i-2,j+2), S(i+2,j+2), S(i-2,j), S(i+2,j), S(i,j-2), S(i,j+2)), die mit entsprechenden Positionen auf dem Videoschirm in der Nachbarschaft der ersten Position assoziiert sind, wodurch ein Kombinationssignal ($V_c(i,j)$ oder $H_c(i,j)$) abgeleitet wird, das der Farbkomponente der Testsignalabtastung nahekommt;

gekennzeichnet durch

(c) Ableiten eines ersten Wertes in Abhängigkeit von der Differenz zwischen zwei Abtastungen (S(i,j-2), S(i,j+2); z.B. S(i-2,j-2), S(i,j)), die in einer ersten Richtung getrennt sind und Farbkomponenten in Phase aufweisen, und eines zweiten Wertes in Abhängigkeit von der Differenz zwischen zwei Abtastungen (S(i-2,j), S(i+2,j); z.B. S(i-2,j+2), S(i,j)), die in einer zweiten Richtung getrennt sind und Farbkomponenten in Phase aufweisen; und

(d) Auswählen der einen der mindestens zwei verschiedenen Weisen in Abhängigkeit von einem Vergleich zwischen den abgeleiteten Werten derart, daß das Kombinationssignal ($V_c(i,j)$ oder $H_c(i,j)$) abgeleitet wird, das durch den Vergleich als das am wenigsten der Verschlechterung unterworfene der mindestens zwei Kombinationssignale angezeigt ist.

13. Leuchtdichte-Farbsignaltrennfilter, mit:

(a) einer Wandlereinrichtung (1) zum Abtasten eines analogen zusammengesetzten Videosignales an geraden Vielfachen einer Farbhilfsträgerfrequenz zum Umwandeln desselben in eine Farbkomponente und eine Leuchtdichtekomponente aufweisendes Digitalsignal;

(b) einer Filtereinrichtung (20, 21, 22, 23, 24, 61, 62, 71, 72, 73, 81, 82, 91, 92, 93, 101, 102) zum Entfernen einer der in dem Digitalsignal enthaltenen Komponenten durch Kombinieren auf eine vorbestimmte Weise von mindestens zweien einer Mehrzahl von Signalabtastungen, die eine mit einer ersten Position auf dem Videoschirm assoziierte Testsignalabtastung (S(i,j)) und mit entsprechenden Positionen auf dem Videoschirm in der Nachbarschaft der ersten Position assoziierte Vergleichssignalabtastungen (S(i,j-2), S(i,j+2), S(i-2,j), S(i+2,j); S(i-2,j-2), S(i+2,j-2), S(i-2,j+2), S(i+2,j+2), S(i-2,j), S(i+2,j), S(i,j-2), S(i,j+2)) aufweisen, wobei die Filtereinrichtung eine erste Kombiniereinrichtung (20, 21, 22, 24, 61, 62, 71, 72, 81, 91, 93, 101) und eine zweite Kombiniereinrichtung (20, 22, 23, 61, 72, 73, 82, 92, 93, 102) zum Berechnen verschiedener Kombinationen der Signalabtastungen aufweist, wodurch ein erstes Kombinationssignal ($V_c(i,j)$) bzw. ein zweites Kombinationssignal ($H_c(i,j)$) abgeleitet wird, von denen jedes der anderen der Komponenten der Testsignalabtastung nahekommt; und eine Auswahleinrichtung (15, 16, 103, 104, 141, 142; 15, 16, 17, 18, 103, 104, 141, 142) zum Ausführen einer Auswahl zwischen mindestens der ersten und zweiten Kombiniereinrichtung zum Bestimmen, welches Kombinationssignal als eine Ausgabe des Filters auszuwählen ist;

dadurch gekennzeichnet, daß die Kombinationssignale so abgeleitet sind, daß sie in Beträgen in Abhängigkeit von Änderungen in dem Videosignal entlang der entsprechenden verschiedenen Richtungen verschlechtert sind, wobei die Auswahleinrichtung eine Einrichtung (103, 141; 103, 141, 17, 18) zum Ableiten eines ersten Wertes in Abhängigkeit von der Differenz zwischen zwei Abtastungen (S(i,j-2), S(i,j+2); z.B. S(i-2,j-2), S(i,j)) die in einer ersten Richtung getrennt sind und Farbkomponenten in Phase aufweisen, eine Einrichtung (104, 142) zum Ableiten eines zweiten Wertes in Abhängigkeit von der Differenz zwischen zwei Abtastungen (S(i-2,j), S(i+2,j); z.B. S(i-2,j+2), S(i,j)), die in einer zweiten Richtung getrennt sind und Farbkomponenten in Phase aufweisen, und eine Einrichtung (15, 16) zum Vergleichen der Werte und zum Auswählen des Kombinationssignales, das durch den Vergleich als das am wenigsten verschlechterte angezeigt ist, aufweist.

# FIG. 1

```
┌──────────┐      ┌──────────┐      ┌──────────┐
│   A/D    │      │ VERTICAL │      │  B.P.F   │────────┬────────→ C SIGNAL
│CONVERTER │─────→│  FILTER  │──┬──→│          │        │
└──────────┘      └──────────┘  │   └──────────┘        │
                                │                       ↓
                                │   ┌──────────┐   ┌──────────┐
                                └──→│  DELAY   │──→│SUBTRACTOR│──→ Y SIGNAL
                                    └──────────┘   └──────────┘
```

# FIG. 2

LINE(j−2) ● ▲ ○ △ ● ▲ ○

LINE(j−1) □ ▶ ■ ▷ □ ▶ ■

LINE(j) ○ △ ● ▲ ○ △ ●

LINE(j+1) ■ ▷ □ ▶ ■ ▷ □

LINE(j+2) ● ▲ ○ △ ● ▲ ○

▲ : y+C2     ■ : y+C2′     ▶ : y+C1′     ● : y+C1

△ : y−C2     □ : y−C2′     ▷ : y−C1′     ○ : y−C1

17

FIG.3

# FIG.4

EP 0 153 034 B1

# F I G. 5